# EUROPEAN PATENT APPLICATION

(11) **EP 3 562 076 A1**
(43) Date of publication of application: **30.10.2019**
(21) Application number: 17894306.4
(22) Date of filing: 24.01.2017
(51) Int. Cl.: H04L 1/16

(54) **DATA TRANSMISSION METHOD AND APPARATUS, AND CUSTOMER PREMISES EQUIPMENT**

(71) Applicant: Huawei Technologies Co., Ltd., Longgang District Shenzhen, Guangdong 518129 (CN)
(72) Inventor: LIN, Nizhong, Shenzhen Guangdong 518129 (CN); PANG, Lingli, Shenzhen Guangdong 518129 (CN); ZHENG, Xiaoxiao, Shenzhen Guangdong 518129 (CN)
(74) Representative: Maiwald Patent- und Rechtsanwaltsgesellschaft mbH
(86) International application number: PCT/CN2017/072518
(87) International publication number: WO 2018/137158

(57) **Abstract**

A data transmission method and apparatus, and customer-premises equipment are provided. Customer-premises equipment CPE receives a first downlink packet sent by a network device, stores the first downlink packet, and creates and maintains a context entry of the first downlink packet. The CPE sends the first downlink packet to a terminal. The CPE receives an acknowledgement packet sent by the terminal for the first downlink packet, and updates the context entry of the first downlink packet. If determining, based on the context entry of the first downlink packet, that the first downlink packet needs to be retransmitted, the CPE retransmits the stored first downlink packet to the terminal. If determining, based on the context entry of the first downlink packet, that a stored to-be-cleared downlink packet and a stored context entry of the to-be-cleared downlink packet need to be cleared, the CPE clears the to-be-cleared downlink packet and the context entry of the to-be-cleared downlink packet. This increases a throughput of TCP data transmission between the terminal and the CPE.

## Description

### TECHNICAL FIELD

This application relates to the field of communication technologies, and in particular, to a data transmission method and apparatus, and customer-premises equipment.

### BACKGROUND

Transmission control protocol (Transmission Control Protocol, TCP) is a connection-oriented, reliable, and byte stream-based transport layer communication protocol. Currently, most data in a mobile network is sent by using the TCP protocol. Because an extra delay (10 ms to 30 ms) introduced into the mobile network and different transmission characteristics of the mobile network and a fixed network, TCP performance of a mobile network bearer is relatively poor. For example, an air interface packet loss causes a transmit end to perform fast retransmission or timeout retransmission, and a congestion window is halved or is reset to an initial value. Consequently, a data transmission rate decreases.

This problem is more acute in data transmission in which a transit routing node participates. In the data transmission in which the transit routing node participates, for example, when a terminal device transmits data with an application server by using customer-premises equipment (Customer Premises Equipment, CPE), and wireless connections include a Wireless Fidelity (Wireless Fidelity, WiFi) connection between the terminal and the CPE and an air interface connection between the CPE and a radio access network (Radio Access Network, RAN) node, packet losses and transmission delays between the terminal and the CPE and between the CPE and the RAN node each cause a decrease in a TCP transmission throughput.

Usually, when TCP data transmission is performed between the CPE and the RAN node, a packet is retransmitted at a radio link control (Radio link Control, RLC) layer and a media access control (Media Access Control, MAC) layer, and a packet loss rate can be controlled at 0.1%. The packet loss rate is relatively low, and there is basically no impact on the TCP transmission throughput. However, when TCP data transmission is performed between the terminal and the CPE through Wi-Fi, an ISM frequency band (2.4G/5G) is used for free networking. In this case, much co-channel interference exists in a same area: access points interfere with each other, and a large quantity of other wireless devices (such as a microwave oven and a remote control) on the 2.4G/5G frequency band may also interfere with each other. In addition, quality of the Wi-Fi connection is also affected by distances, obstacles, device loads, and device differences. Consequently, when the TCP data transmission is performed between the terminal and the CPE through Wi-Fi, a packet loss rate is relatively high, and the application server needs to retransmit the packet. When the application server retransmits the packet, air interface resources are occupied. Moreover, due to a packet loss, the application server may halve a TCP send window or reset a TCP send window to an initial value because a quantity of times of sending a TCP acknowledgement packet reaches a threshold. This affects the TCP transmission throughput.

### SUMMARY

Embodiments of this application provide a data transmission method and apparatus, and customer-premises equipment, to increase a TCP transmission throughput when TCP data transmission is performed between a terminal and the CPE through Wi-Fi.

According to a first aspect, a data transmission method is provided. In the method, CPE receives downlink data sent by a network device, stores a received first downlink packet, and creates and maintains a context entry of the received first downlink packet. The CPE sends the received first downlink packet to a terminal, and when receiving an acknowledgement packet sent by the terminal for the first downlink packet, updates the context entry of the first downlink packet. The CPE determines, based on the context entry of the first downlink packet, whether the first downlink packet needs to be retransmitted, and if determining that the first downlink packet needs to be retransmitted, retransmits the stored first downlink packet to the terminal. The CPE determines, based on the context entry of the first downlink packet, whether a stored to-be-cleared downlink packet and a stored context entry of the to-be-cleared downlink packet need to be cleared, and if determining that the stored to-be-cleared downlink packet and the stored context entry of the to-be-cleared downlink packet need to be cleared, clears the to-be-cleared downlink packet and the context entry of the to-be-cleared downlink packet that are stored in the CPE.

The to-be-cleared downlink packet and the first downlink packet belong to a same transmission control protocol TCP link, and a TCP sequence number of the to-be-cleared downlink packet is less than a TCP sequence number of the first downlink packet.

In this embodiment of this application, the CPE receives and stores the first downlink packet sent by the network device, creates and maintains the context entry of the first downlink packet, receives the acknowledgement packet sent by the terminal for the first downlink packet, updates the context entry of the first downlink packet based on the acknowledgement packet, and determines, based on the context entry of the first downlink packet, whether the first downlink packet needs to be retransmitted and whether clearing needs to be performed. If the terminal requires the network device to retransmit the first downlink packet, the CPE retransmits the stored first downlink packet to the terminal, to reduce occupation of air interface resources caused by packet retransmission performed by the network device, thereby saving air interface resources. This also avoids impact on a TCP transmission throughput that is caused by halving of a TCP send window or resetting of a TCP send window to an initial value by the network device due to a packet loss, thereby increasing the TCP transmission throughput. In this embodiment of this application, clearing the stored to-be-cleared downlink packet and the stored context entry of the to-be-cleared downlink packet can free a buffer of the CPE.

The uplink/downlink entry of the first downlink packet may include an identifier of the first downlink packet and a sequence number of the first downlink packet that is determined by the CPE based on a receiving sequence of the first downlink packet. The identifier of the first downlink packet includes the TCP sequence number, and may further include any one of a source IP address, a destination IP address, a source port number, a destination port number, and a version number. The uplink/downlink entry of the first downlink packet may further include an acknowledgement packet count of the first downlink packet, a retransmission quantity of the first downlink packet, a frame number of a MAC layer frame, and the like.

In a possible design, before storing the received first downlink packet, the CPE may determine whether the first downlink packet needs to be stored, and store the first downlink packet when determining that the first downlink packet needs to be stored. In an implementation, the CPE may determine whether the received first downlink packet is a TCP packet and determine whether a buffer size of the CPE is less than a preset buffer size, and if determining that the first downlink packet is a TCP packet and that the buffer size of the CPE is less than the preset buffer size, determine that the first downlink packet needs to be stored. In another implementation, if determining that the first downlink packet is a TCP packet, and that a buffer size of the CPE is equal to the preset buffer size and in buffered downlink packets, there is a second downlink packet with a service priority lower than a service priority of the received first downlink packet, the CPE may determine that the received first downlink packet needs to be buffered.

In another possible design, the context entry of the first downlink packet includes a sequence number of the first downlink packet, an identifier of the first downlink packet, and an acknowledgement packet count of the first downlink packet, and the identifier of the first downlink packet includes the TCP sequence number. If the acknowledgement packet that is sent by the terminal for the first downlink packet and that is received by the CPE is a TCP acknowledgement packet, the CPE increases a value of the acknowledgement packet count in the context entry of the first downlink packet by 1, to update the context entry of the first downlink packet. If the CPE determines that the value of the acknowledgement packet count of the first downlink packet is a predetermined acknowledgement packet count value or determines that the TCP packet is not stored in the CPE, the CPE determines that another first downlink packet and a context entry of the another first downlink packet that are stored in the CPE need to be cleared, where the another first downlink packet is on a same TCP link as the first downlink packet and has a TCP sequence number less than the TCP sequence number of the first downlink packet.

In a possible implementation, if the CPE determines that the value of the acknowledgement packet count of the first downlink packet is equal to a first retransmission threshold, the CPE determines that the first downlink packet needs to be retransmitted. After the CPE retransmits the stored first downlink packet to the terminal, the CPE sets the value of the acknowledgement packet count of the first downlink packet to 0.

In another possible implementation, after updating the context entry of the first downlink packet, if the CPE determines that the value of the acknowledgement packet count of the first downlink packet is equal to a first forwarding threshold, the CPE forwards the TCP acknowledgement packet to the network device.

In still another possible implementation, if the CPE determines that the value of the acknowledgement packet count of the first downlink packet is greater than a second retransmission threshold, the CPE determines that the first downlink packet needs to be retransmitted.

In still another possible implementation, after updating the context entry of the first downlink packet, if determining that the value of the acknowledgement packet count of the first downlink packet is greater than the second retransmission threshold, the CPE determines whether the value of the acknowledgement packet count of the first downlink packet is less than a second forwarding threshold; and if the value of the acknowledgement packet count of the first downlink packet is less than the second forwarding threshold, the CPE stores the TCP acknowledgement packet. If the value of the acknowledgement packet count of the first downlink packet is not less than the second forwarding threshold, the CPE sends all stored TCP acknowledgement packets of the first downlink packet to the network device; or if the CPE determines that the value of the acknowledgement packet count of the first downlink packet is not less than the second forwarding threshold and that the value of the acknowledgement packet count of the first downlink packet is a positive integer multiple of the second forwarding threshold, the CPE sends instruction information to the network device, where the instruction information is used to instruct the network device not to reduce a TCP send window.

In still another design, the context entry of the first downlink packet includes a sequence number of the first downlink packet, an identifier of the first downlink packet, a frame number of a media access control MAC layer frame into which the first downlink packet is encapsulated, a retransmission count of the first downlink packet, and a flag bit indicating whether the first downlink packet is successfully sent or not, and the identifier of the first downlink packet includes the TCP sequence number. If the acknowledgement packet that is sent by the terminal for the first downlink packet and that is received by the CPE is a MAC layer ACK packet, the flag bit used to indicate whether the first downlink packet is successfully sent or not is set to indicate that the first downlink packet has been successfully sent. If the acknowledgement packet that is sent by the terminal for the first downlink packet and that is received by the CPE is a MAC layer negative acknowledgement NACK packet, and a retransmission quantity of a MAC frame corresponding to the MAC layer NACK packet has reached a maximum MAC layer retransmission quantity, a value of the retransmission count in the context entry of the first downlink packet is increased by 1. If the CPE determines that the flag bit indicating whether the first downlink packet is successfully sent or not is set to indicate that the first downlink packet has been successfully sent, the CPE determines that another first downlink packet and a context entry of the another first downlink packet that are stored in the CPE need to be cleared, where the another first downlink packet is on a same TCP link as the first downlink packet and has a TCP sequence number less than the TCP sequence number of the first downlink packet. If the CPE determines that the value of the retransmission count is greater than a third retransmission threshold, the CPE determines that the first downlink packet needs to be retransmitted. After the CPE retransmits the first downlink packet to the terminal, the CPE updates the MAC frame number in the context entry with a new MAC layer frame number after MAC layer encapsulation.

In a possible implementation, after updating the context entry of the first downlink packet, if determining that the value of the retransmission count is greater than the third forwarding threshold, the CPE determines whether the value of the retransmission count is less than a third forwarding threshold; and if the value of the retransmission count is less than the third forwarding threshold, the CPE stores a received TCP acknowledgement packet of the first downlink packet. If the value of the retransmission count is not less than the third forwarding threshold, the CPE sends all stored TCP acknowledgement packets of the first downlink packet to the network device; or if the CPE determines that the value of the retransmission count is not less than the third forwarding threshold and that a value of an acknowledgement packet count of the first downlink packet is a positive integer multiple of the third forwarding threshold, the CPE sends instruction information to the network device, where the instruction information is used to instruct the network device not to reduce a TCP send window.

In still another possible design, after storing the first downlink packet, the CPE generates a TCP acknowledgement packet of the stored first downlink packet and sends the TCP acknowledgement packet to the network device.

After sending the TCP acknowledgement packet of the first downlink packet to the network device, if receiving a TCP acknowledgement packet sent by the terminal for the first downlink packet, the CPE discards the TCP acknowledgement packet sent by the terminal for the first downlink packet.

According to a second aspect, a data transmission apparatus is provided. The data transmission apparatus has functions for implementing the CPE in the foregoing first aspect. The functions may be implemented by hardware or may be implemented by executing corresponding software by hardware. The hardware or software includes one or more modules that correspond to the foregoing functions. The modules may be software and/or hardware.

In a possible design, the data transmission apparatus includes a receiving unit, a buffer unit, a processing unit, and a sending unit. Functions of the receiving unit, the buffer unit, the processing unit, and the sending unit may correspond to steps of the method. Details are not described herein again.

In another possible design, the receiving unit may be a receiver, the buffer unit may be a memory, the processing unit may be a processor, and the sending unit may be a transmitter. If the receiving unit is a receiver, the buffer unit is a memory, the processing unit is a processor, and the sending unit is a transmitter, the data transmission apparatus may be customer-premises equipment. The customer-premises equipment includes a receiver, a memory, a processor, and a transmitter. The memory is configured to store an instruction, and the processor is configured to execute the instruction stored in the memory, to implement functions of the foregoing processing unit and control the receiver, the memory, and the transmitter to implement corresponding functions of the foregoing receiving unit, buffer unit, and sending unit.

According to the data transmission method and apparatus, and the customer-premises equipment that are provided in this application, the customer-premises equipment receives and stores the first downlink packet sent by the network device, creates and maintains the context entry of the first downlink packet, receives the acknowledgement packet sent by the terminal for the first downlink packet, updates the context entry of the first downlink packet based on the acknowledgement packet, and determines, based on the context entry of the first downlink packet, whether the first downlink packet needs to be retransmitted and whether clearing needs to be performed. If the terminal requires the network device to retransmit the first downlink packet, the customer-premises equipment retransmits the stored first downlink packet to the terminal, to reduce occupation of air interface resources caused by packet retransmission performed by the network device, thereby saving air interface resources. This also avoids impact on a TCP transmission throughput that is caused by halving of a TCP send window or resetting of a TCP send window to an initial value by the network device due to a packet loss, thereby increasing the TCP transmission throughput. In the embodiments of this application, clearing the stored to-be-cleared downlink packet and the stored context entry of the to-be-cleared downlink packet can free a buffer of the CPE.

### DESCRIPTION OF DRAWINGS

FIG. 1 is an architectural diagram of a system to which a data transmission method is applied according to this application;
FIG. 2 is an implementation flowchart of a data transmission method according to this application;
FIG. 3 is an implementation flowchart of a data transmission method according to a first embodiment of this application;
FIG. 4A and FIG. 4B are an implementation flowchart of a data transmission method according to a second embodiment of this application;
FIG. 5A and FIG. 5B are an implementation flowchart of a data transmission method according to a second embodiment of this application;
FIG. 6 is another implementation flowchart of a data transmission method according to this application;
FIG. 7 is a schematic structural diagram of a data transmission apparatus according to this application; and
FIG. 8 is a schematic structural diagram of customer-premises equipment according to this application.

### DESCRIPTION OF EMBODIMENTS

The following describes the embodiments of this application with reference to accompanying drawings.

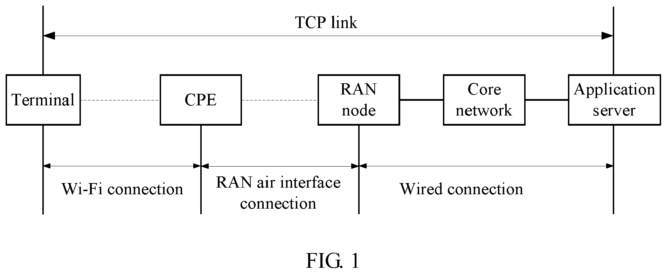

A data transmission method provided in the embodiments of this application may be applied to a system in which wireless data transmission is performed by using a transit routing node. A data receive end and a data transmit end exchange data through Wi-Fi, an RAN, and a core network. A TCP connection is established between the data receive end and the data transmit end, and data is transmitted by using the TCP protocol. For example, as shown in FIG. 1, a terminal and an application server exchange data, the terminal is connected to a transit routing node such as CPE, and the transit routing node such as the CPE accesses a RAN node through an air interface and is connected to the application server through a core network. A wireless connection between the terminal and the transit routing node such as the CPE may be referred to as a Wi-Fi connection, a wireless connection between the transit routing node such as the CPE and a RAN may be referred as a RAN air interface connection, and a network between the RAN and a network device is a wired network, which may also be referred to as a wired connection. A TCP link may be established between the network device and the terminal and data is transmitted.

The embodiments of this application provide a data transmission method. CPE receives and stores a downlink packet sent by a network device, and if determining that a terminal requires the network device to retransmit the downlink packet, the CPE retransmits the stored downlink packet to the terminal, to avoid or reduce occupation of air interface resources caused by packet retransmission performed by the network device (an application server or a RAN node), thereby saving air interface resources. The CPE sends, to the network device, positive feedback information indicating that the downlink packet is correctly received, to avoid impact on a TCP transmission throughput that is caused by halving of a TCP send window or resetting of a TCP send window to an initial value by the network device due to a packet loss, thereby increasing the TCP transmission throughput.

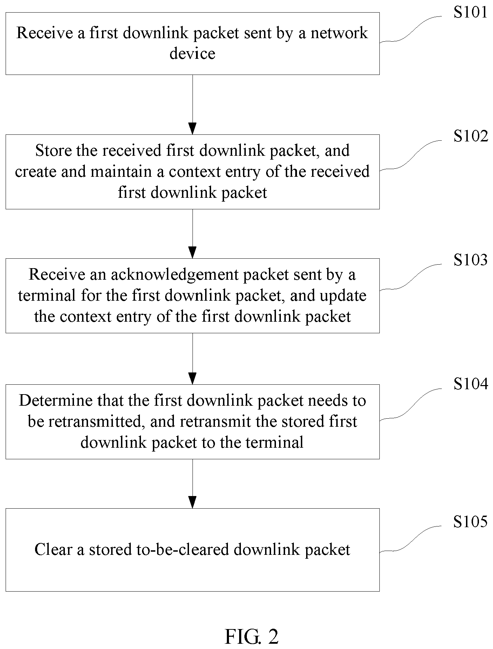

FIG. 2 is a flowchart of a data transmission method according to an embodiment of this application. The method shown in FIG. 2 may be performed by a transit routing node such as CPE, a component in a transit routing node such as CPE, or another functional entity having a corresponding function. This is not limited in this embodiment of this application. The following merely uses an example in which the method is performed by CPE for description. As shown in FIG. 2, the method includes the following steps.

S101: The CPE receives a first downlink packet sent by a network device.

S102: The CPE stores the received first downlink packet, and creates and maintains a context entry of the received first downlink packet.

In an embodiment of this application, before storing the received first downlink packet, the CPE may determine whether the first downlink packet needs to be stored, and store the first downlink packet when determining that the first downlink packet needs to be stored.

In this embodiment of this application, to prevent other services of the CPE from being affected when the CPE performs the data transmission method provided in this application, a buffer for storing the first downlink packet may be disposed in the CPE in advance, and a size of the buffer may be preset.

In this embodiment of this application, description is provided by using an example in which the first downlink packet is a TCP packet. The CPE may determine, in the following manners, whether the received first downlink packet needs to be stored.

In an implementation, the CPE may determine whether the received first downlink packet is a TCP packet and determine whether a buffer size of the CPE is less than the preset buffer size, and if determining that the first downlink packet is a TCP packet and that the buffer size of the CPE is less than the preset buffer size, determine that the first downlink packet needs to be stored.

In another implementation, if determining that the first downlink packet is a TCP packet, and that a buffer size of the CPE is equal to the preset buffer size and in buffered downlink packets, there is a second downlink packet with a service priority lower than a service priority of the received first downlink packet, the CPE may determine that the received first downlink packet needs to be buffered. In this implementation, when the first downlink packet is stored, a packet with the lowest service priority in the buffer can be overwritten.

In this embodiment of this application, the uplink/downlink entry of the first downlink packet may include an identifier of the first downlink packet and a sequence number of the first downlink packet that is determined by the CPE based on a receiving sequence of the first downlink packet. The identifier of the first downlink packet includes a TCP sequence number, and may further include any one of a source IP address, a destination IP address, a source port number, a destination port number, and a version number. The uplink/downlink entry of the first downlink packet may further include an acknowledgement packet count of the first downlink packet (for example, a quantity of times of receiving a TCP acknowledgement packet of the first downlink packet), a quantity of retransmissions of the first downlink packet, a frame number of a MAC layer frame, and the like.

S103: The CPE sends the first downlink packet to a terminal, receives an acknowledgement packet sent by the terminal for the first downlink packet, and updates the context entry of the first downlink packet.

In this application, updating the context entry of the first downlink packet by the CPE is mainly updating the acknowledgement packet count of the first downlink packet, the quantity of retransmissions of the first downlink packet, the frame number of the MAC layer frame, and the like.

S104: The CPE determines, based on the context entry of the first downlink packet, whether the first downlink packet needs to be retransmitted, and if determining that the first downlink packet needs to be retransmitted, retransmits the stored first downlink packet to the terminal, updates the stored context entry of the first downlink packet, and may further send the acknowledgement packet to the network device or send instruction information to the network device to instruct the network device not to reduce a send window.

In an embodiment of this application, if determining that the first downlink packet does not need to be retransmitted and determining that the first downlink packet is correctly received by the terminal, the CPE may clear a stored to-be-cleared downlink packet and a stored context entry of the to-be-cleared downlink packet, and may further send feedback information that the first downlink packet has been correctly received to the network device. The to-be-cleared downlink packet and the first downlink packet belong to a same transmission control protocol TCP link, and a TCP sequence number of the to-be-cleared downlink packet is less than the TCP sequence number of the first downlink packet.

S105: The CPE determines, based on the context entry of the first downlink packet, whether a stored to-be-cleared downlink packet and a stored context entry of the to-be-cleared downlink packet need to be cleared, and if determining that the stored to-be-cleared downlink packet and the stored context entry of the to-be-cleared downlink packet need to be cleared, clears the to-be-cleared downlink packet and the context entry of the to-be-cleared downlink packet that are stored in the CPE.

In this embodiment of this application, the CPE receives and stores the first downlink packet sent by the network device, creates and maintains the context entry of the first downlink packet, receives the acknowledgement packet sent by the terminal for the first downlink packet, updates the context entry of the first downlink packet based on the acknowledgement packet, and determines, based on the context entry of the first downlink packet, whether the first downlink packet needs to be retransmitted and whether clearing needs to be performed. If the terminal requires the network device to retransmit the first downlink packet, the CPE retransmits the stored first downlink packet to the terminal, to reduce occupation of air interface resources caused by packet retransmission performed by the network device, thereby saving air interface resources. This also avoids impact on a TCP transmission throughput that is caused by halving of a TCP send window or resetting of a TCP send window to an initial value by the network device due to a packet loss, thereby increasing the TCP transmission throughput. In this embodiment of this application, clearing the stored to-be-cleared downlink packet and the stored context entry of the to-be-cleared downlink packet can free the buffer of the CPE.

In this embodiment of this application, when the context entry of the first downlink packet includes different content, the CPE uses different processing manners in a data transmission processing process. For example, the CPE updates the context entry in different manners, and determines, in different manners, whether the first downlink packet needs to be retransmitted.

The following describes a specific implementation process of the data transmission method in this application with reference to specific embodiments.

In a first embodiment of this application, that the first downlink packet is a TCP packet and the context entry includes a context entry shown in Table 1 is used as an example for description.

**Table 1**

| **Sequence number of a first downlink packet** | **Identifier of a first downlink packet** | **Acknowledgement packet count (ACKNum) of a first downlink packet** |
|---|---|---|
| A value of the sequence number ranges from 0 to N. Based on a receiving sequence, CPE increases the sequence number of the packet by 1 each time a TCP packet is received. | A TCP link identifier <a source IP address, a destination IP address, a source port number, a destination port number, and a version>, a TCP sequence number, and a length (Length) | A value of ACKNum is a positive integer in [0, 3]. An initial value of ACKNum is 0. The count is increased by 1 each time an acknowledgement packet of the TCP packet is received later. |

It should be noted that the identifier of the first downlink packet in the context entry shown in Table 1 is only an example for description. In specific implementation, the identifier of the first downlink packet necessarily includes the TCP sequence number and optionally includes other parameters. For example, when the CPE determines that there is only one TCP link corresponding to the CPE, an identifier of a packet needs to include only a TCP SN, and does not need to include a parameter of a TCP link identifier. When the CPE determines that there are a plurality of TCP connections corresponding to the CPE, and different TCP connections have a same source IP and a same destination IP and different port numbers, an identifier of a packet needs to include only a source port, a destination port, and a TCP SN. Certainly, other cases exist, and details are not described herein.

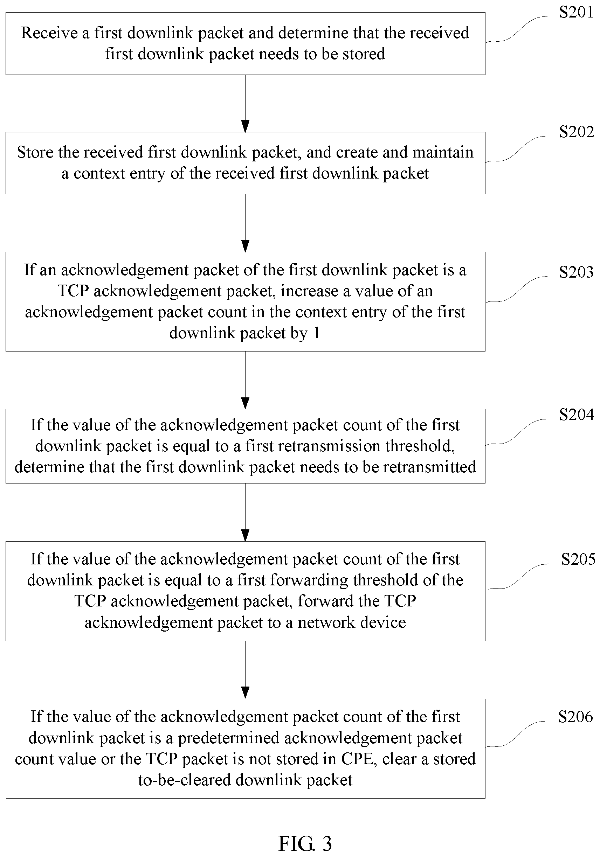

FIG. 3 is an implementation flowchart of a data transmission method according to a first embodiment of this application. As shown in FIG. 3, the method includes the following steps.

S201: CPE receives a first downlink packet and determines that the received first downlink packet needs to be stored.

S202: The CPE stores the received first downlink packet, and creates and maintains a context entry of the received first downlink packet.

In this embodiment of this application, after determining that the first downlink packet sent by a network device is correctly received, the CPE creates and maintains the context entry of the received first downlink packet.

S203: The CPE receives an acknowledgement packet sent by a terminal for the first downlink packet; and if the acknowledgement packet that is sent by the terminal for the first downlink packet and that is received by the CPE is a TCP acknowledgement packet, the CPE increases a value of an acknowledgement packet count in the context entry of the first downlink packet by 1, to update the context entry of the first downlink packet.

In this embodiment of this application, after receiving the TCP acknowledgement packet sent by the terminal, the CPE may obtain a source IP, a destination IP, a source port, a destination port, version information, and a TCP acknowledgement sequence number from the TCP acknowledgement packet. The CPE determines a TCP link identifier based on the source IP address, the destination IP address, the source port number, the destination port number, the version number, and the context information maintained in Table 1. The source IP, the destination IP, the source port, and the destination port in the TCP acknowledgement packet are opposite to the source IP address, the destination IP address, the source port, and the destination port of the first downlink packet in the context information maintained in Table 1. The CPE determines, based on the TCP acknowledgement sequence number, a first downlink packet that is on this TCP link and that corresponds to the TCP acknowledgement packet. If link identifiers are the same, a TCP acknowledgement packet sequence number is equal to the TCP sequence number.

In this application, after determining the first downlink packet (Packet N) corresponding to the received TCP acknowledgement packet, the CPE updates ACKNum in a maintained context entry of the packet N. Updated ACKNum is equal to to-be-updated ACKNum plus 1.

S204: The CPE determines whether a packet N needs to be retransmitted.

In this embodiment of this application, a first retransmission threshold for triggering retransmission of the packet N may be preset. When the value of the acknowledgement packet count of the first downlink packet is equal to the first retransmission threshold, the CPE determines that the first downlink packet needs to be retransmitted, and updates the stored context entry of the first downlink packet. When the value of the acknowledgement packet count of the first downlink packet is unequal to the first retransmission threshold, the CPE determines that the first downlink packet does not need to be retransmitted. For example, in this embodiment of this application, the first retransmission threshold is set to 3. When ACKNum=3, the CPE determines that the packet N needs to be retransmitted, and sets the value of the acknowledgement packet count of the first downlink packet to 0. When ACKNum≠3, the CPE determines that the packet N does not need to be retransmitted.

S205: The CPE determines whether to forward the TCP acknowledgement packet to the network device.

In this embodiment of this application, a first forwarding threshold for forwarding the TCP acknowledgement packet may be preset. If determining that the value of the acknowledgement packet count of the first downlink packet is equal to the first forwarding threshold, the CPE may determine that the TCP acknowledgement packet needs to be forwarded to the network device, and forward the TCP acknowledgement packet to the network device. If determining that the value of the acknowledgement packet count of the first downlink packet is unequal to the first forwarding threshold, the CPE may determine that the TCP acknowledgement packet does not need to be forwarded to the network device. A quantity of first forwarding thresholds is not limited to 1, and there may be a plurality of first forwarding thresholds. For example, in this embodiment of this application, the first forwarding threshold may be set to 1 and 3. If ACKNum=1 or 3, the CPE determines that the TCP acknowledgement packet needs to be forwarded to the network device, and forwards the TCP acknowledgement packet to the network device.

In a possible implementation, a first predetermined threshold for not forwarding the TCP acknowledgement packet may alternatively be set in this embodiment of this application. If the CPE determines that the value of the acknowledgement packet count of the first downlink packet is unequal to the first predetermined threshold for not forwarding the TCP acknowledgement packet, the CPE forwards the TCP acknowledgement packet to the network device. If the CPE determines that the value of the acknowledgement packet count of the first downlink packet is equal to the first predetermined threshold for not forwarding the TCP acknowledgement packet, the CPE does not need to forward the TCP acknowledgement packet to the network device. For example, in this embodiment of this application, the first predetermined threshold for not forwarding the TCP acknowledgement packet is set to 2. When ACKNum≠2, the CPE determines that the TCP acknowledgement packet needs to be forwarded to the network device. When ACKNum=2, the CPE does not forward the TCP acknowledgement packet to the network device, but discards the TCP acknowledgement packet, so that the network device delays fast retransmission of the TCP packet.

Setting the first retransmission threshold in step S204 and setting the first forwarding threshold in step S205 are intended to avoid unnecessary retransmission in a scenario in which a lost TCP packet can be recovered through MAC layer retransmission.

S206: If the CPE determines that the value of the acknowledgement packet count of the first downlink packet is a predetermined acknowledgement packet count value or determines that the TCP packet is not stored in the CPE, the CPE clears the to-be-cleared downlink packet and a context entry of the to-be-cleared downlink packet that are stored in the CPE.

In this embodiment of this application, if the CPE determines that the value of the acknowledgement packet count of the first downlink packet is not a predetermined acknowledgement packet count value or determines that the TCP packet is stored in a buffer of the CPE, the CPE does not clear the to-be-cleared downlink packet and the context entry of the to-be-cleared downlink packet that are stored in the CPE.

For example, in this embodiment of this application, the predetermined acknowledgement packet count value is set to 1. If ACKNum=1 or the packet N is not in the buffer, the CPE clears, from the buffer, a first downlink packet belonging to the TCP link and a context of the first downlink packet, where a TCP sequence number corresponding to the first downlink packet is less than a TCP sequence number corresponding to the packet N, and forwards the received TCP acknowledgement packet to the network device. If ACKNum≠1 or the packet N is stored in the buffer of the CPE, the CPE does not clear the to-be-cleared downlink packet and the context entry of the to-be-cleared downlink packet that are stored in the CPE.

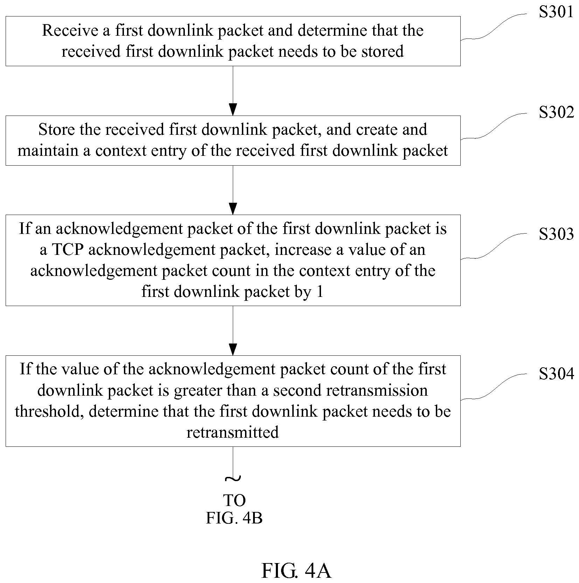

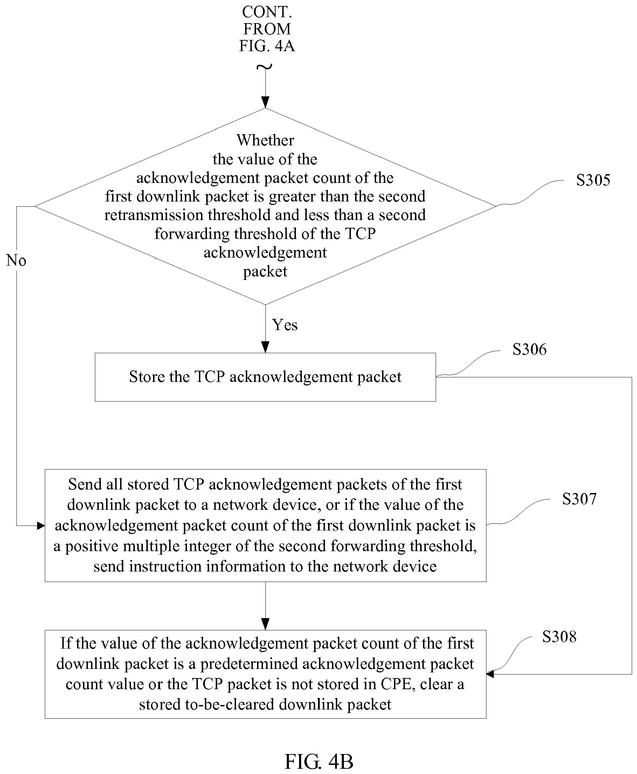

In this application, a data transmission method shown in FIG. 4A and FIG. 4B may be used when the CPE may determine that a currently received TCP acknowledgement packet corresponding to the packet N is determined after the packet N is retransmitted through Wi-Fi for a maximum MAC layer retransmission quantity, or when the following case is not considered: Due to MAC layer retransmission during Wi-Fi transmission, the terminal correctly receives the first downlink packet after sending a TCP negative acknowledgement (NACK) packet to the CPE (for example, an application server sends a TCP packet whose sequence number is 1 to the terminal, and the terminal does not receive the TCP packet correctly, and feeds back a TCP acknowledgement packet whose acknowledgement sequence number is 1, where the TCP acknowledgement packet may be referred to as a TCP NACK packet).

FIG. 4A and FIG. 4B are a flowchart of a data transmission method according to a second embodiment of this application. During implementation of the data transmission method shown in FIG. 4A and FIG. 4B, a maintained context of a first downlink packet is similar to that in Table 1, and a difference lies in that a value of ACKNum may be any positive integer.

Execution processes of S301, S302, S303, and S308 in FIG. 4A and FIG. 4B are the same as the execution processes of S201, S202, S203, and S206. Details are not described herein again. Only different parts are described in the following.

S304: If the CPE determines that the value of the acknowledgement packet count of the first downlink packet is greater than a second retransmission threshold, the CPE determines that the first downlink packet needs to be retransmitted.

In this embodiment of this application, a second retransmission threshold for triggering retransmission of the first downlink packet may be preset. If determining that the value of the acknowledgement packet count of the first downlink packet is greater than the second retransmission threshold, the CPE determines that the first downlink packet needs to be retransmitted. If determining that the value of the acknowledgement packet count of the first downlink packet is less than or equal to the second retransmission threshold, the CPE determines that the first downlink packet does not need to be retransmitted. For example, in this embodiment of this application, the second retransmission threshold is set to 1. If ACKNum>1, the CPE determines that the first downlink packet needs to be retransmitted. If ACKNum<1, the CPE determines that the first downlink packet needs to be retransmitted.

S305: If the CPE determines that the value of the acknowledgement packet count of the first downlink packet is greater than the second retransmission threshold, the CPE may further determine whether the value of the acknowledgement packet count of the first downlink packet is less than a second forwarding threshold.

S306: If the value of the acknowledgement packet count of the first downlink packet is less than the second forwarding threshold, the CPE stores the TCP acknowledgement packet.

In this embodiment of this application, the CPE stores the TCP acknowledgement packet by using a sequence number of the first downlink packet as an index.

S307: If the value of the acknowledgement packet count of the first downlink packet is not less than the second forwarding threshold, the CPE sends all stored TCP acknowledgement packets of the first downlink packet to a network device, to trigger fast retransmission performed by the network device, thereby avoiding timeout retransmission that affects TCP performance. Alternatively, if the value of the acknowledgement packet count of the first downlink packet is not less than the second forwarding threshold, the CPE further determines whether the value of the acknowledgement packet count of the first downlink packet is equal to a positive integer multiple of the second forwarding threshold. If determining that the value of the acknowledgement packet count of the first downlink packet is a positive integer multiple of the second forwarding threshold, the CPE sends instruction information to the network device, where the instruction information is used to instruct the network device not to reduce a TCP send window.

For example, in this embodiment of this application, the second forwarding threshold is set to 4. If 1<ACKNum<4, that is, ACKNum=2 or 3, the CPE stores the TCP acknowledgement packet by using the sequence number of the first downlink packet as an index. If ACKNum is not less than 4, the CPE sends all the stored TCP acknowledgement packets of the first downlink packet to the network device; or if ACKNum is not less than 4 and ACKNum is an integer multiple of 4, for example, ACKNum=4 or 8, the CPE sends the instruction information to the network device.

In this embodiment of this application, a specific implementation process of instructing the network device not to reduce the TCP send window is not limited. For example, a retransmission timer corresponding to a packet N may be restarted, to avoid halving the send window or reducing the send window to an initial value due to timeout retransmission, and the TCP packet is not retransmitted.

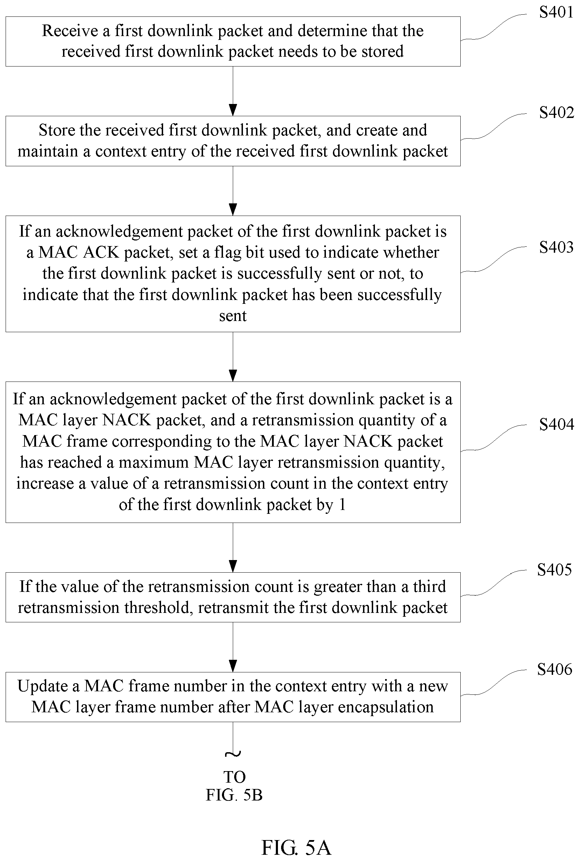

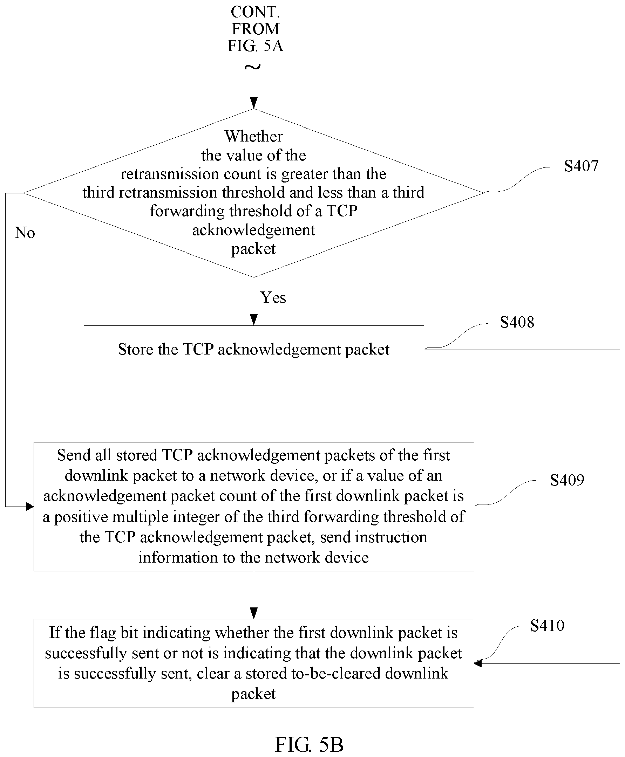

FIG. 5A and FIG. 5B are a flowchart of a data transmission method according to a third embodiment of this application. During implementation of the data transmission method shown in FIG. 5A and FIG. 5B, a maintained context of a first downlink packet is shown in Table 2.

**Table 2**

| **Sequence number of a first downlink packet** | **Identifier of a first downlink packet** | **Frame number of a MAC layer frame into which a first downlink packet is encapsulated** | **Retransmission count (RetransNum) of a first downlink packet** | **Flag bit indicating whether a first downlink packet is successfully sent or not** |
|---|---|---|---|---|
| A value of the sequence number ranges from 0 to N. Based on a receiving sequence, CPE increases the sequence number of the packet by 1 each time a TCP packet is received. | A TCP link identifier <a source IP address, a destination IP address, a source port number, a destination port number, and a version>, a TCP sequence number, and a length (Length) | A frame number of a MAC layer frame, which is updated after each MAC layer encapsulation | A value of RetransNum is a positive integer in [0, maximum retransmission count]. An initial value of RetransNum is 0, and RetransNum is increased by 1 each time CPE performs retransmission once later. | An initial value is false. When it is determined that the first downlink packet is correctly received, a value is set to true. |

Referring to FIG. 5A and FIG. 5B, an implementation process of the data transmission method provided in the third embodiment of this application includes the following steps.

S401: CPE receives a first downlink packet and determines that the received first downlink packet needs to be stored.

S402: The CPE stores the received first downlink packet, and creates and maintains a context entry of the received first downlink packet.

In this embodiment of this application, after determining that the first downlink packet sent by a network device is correctly received, the CPE creates and maintains the context entry of the received first downlink packet.

S403: If an acknowledgement packet that is sent by a terminal for the first downlink packet and that is received by the CPE is a MAC positive acknowledgement packet (for example, ACK acknowledgement information), where the positive acknowledgement packet is described as an ACK packet below, the CPE sets a flag bit used to indicate whether the first downlink packet is successfully sent or not, to indicate that the first downlink packet has been successfully sent. For example, the flag bit being true indicates that the first downlink packet has been successfully sent, the flag bit being false indicates that the first downlink packet has not been successfully sent, and an initial value of the flag bit indicating whether the first downlink packet is successfully sent or not is set to false. If the acknowledgement packet that is sent by the terminal for the first downlink packet and that is received by the CPE is a MAC ACK packet, the CPE sets the flag bit indicating whether the first downlink packet is successfully sent or not to true.

S404: If an acknowledgement packet that is sent by the terminal for the first downlink packet and that is received by the CPE is a MAC layer negative acknowledgement packet (NACK, negative ACK acknowledgement information), where the negative acknowledgement packet is described as a NACK packet below, and a retransmission quantity of a MAC frame corresponding to the MAC layer NACK packet has reached a maximum MAC layer retransmission quantity, the CPE increases a value of a retransmission count in the context entry of the first downlink packet by 1.

It should be noted that in S403 and S404, the CPE receives a MAC layer acknowledgement packet sent by the terminal, determines a sequence number of the first downlink packet based on a MAC frame number in the MAC acknowledgement packet and the MAC frame number in the maintained context, and further determines that the MAC layer acknowledgement packet is an acknowledgement packet of the first downlink packet.

S405: If the CPE determines that the value of the retransmission count is greater than a third retransmission threshold, the CPE determines that the first downlink packet needs to be retransmitted.

In this embodiment of this application, the third retransmission threshold for triggering retransmission of the first downlink packet may be preset. If the CPE determines that the value of the retransmission count is greater than the third retransmission threshold, the CPE determines that the first downlink packet needs to be retransmitted, and retransmits the first downlink packet. When the CPE determines that the value of the retransmission count is less than or equal to the third retransmission threshold, the CPE determines that the first downlink packet does not need to be retransmitted.

S406: Because retransmission leads to MAC layer encapsulation, the CPE updates a MAC frame number in the context entry with a new MAC layer frame number after the MAC layer encapsulation.

S407: If the CPE determines that the value of the retransmission count is greater than the third retransmission threshold, the CPE further determines whether the value of the retransmission count is less than a third forwarding threshold.

S408: If the value of the retransmission count is less than the third forwarding threshold, the CPE stores a received TCP acknowledgement packet of the first downlink packet.

For example, in this embodiment of this application, the third forwarding threshold is set to 4. When a transmission count (RetransNum+1) of a packet N is greater than 1 and less than 4, a received duplicate TCP acknowledgement packet corresponding to the packet N is stored, but is not forwarded to the network device.

S409: If the value of the retransmission count is not less than the third forwarding threshold, the CPE sends all stored TCP acknowledgement packets of the first downlink packet to the network device, to trigger fast retransmission performed by the network device, thereby avoiding timeout retransmission that affects TCP performance. Alternatively, if the value of the retransmission count is not less than the third forwarding threshold, the CPE further determines whether a value of an acknowledgement packet count of the first downlink packet is equal to a positive integer multiple of the third forwarding threshold. If the CPE determines that the value of the acknowledgement packet count of the first downlink packet is a positive integer multiple of the third forwarding threshold, the CPE sends instruction information to the network device, where the instruction information is used to instruct the network device not to reduce a TCP send window.

For example, in this embodiment of this application, the third forwarding threshold is set to 4. When a transmission count (RetransNum+1) of a packet N is not less than 4, all received TCP acknowledgement packets corresponding to the packet N are sent to the network device. When a transmission count (RetransNum+1) of a packet N is not less than 4 and is a positive integer multiple of 4, for example, is equal to 4 or 8, the CPE sends the instruction information to the network device.

In this embodiment of this application, a specific implementation process of instructing the network device not to reduce the TCP send window is not limited. For example, a retransmission timer corresponding to the packet N may be restarted, to avoid halving the send window or reducing the send window to an initial value due to timeout retransmission, and the TCP packet is not retransmitted.

S410: If the CPE determines that the flag bit indicating whether the first downlink packet is successfully sent or not is indicating that the first downlink packet is successfully sent, for example, the flag bit is set to true, the CPE clears another first downlink packet and a context entry of the another first downlink packet that are stored in the CPE, where the another first downlink packet is on a same TCP link as the first downlink packet and has a TCP sequence number less than a TCP sequence number of the first downlink packet.

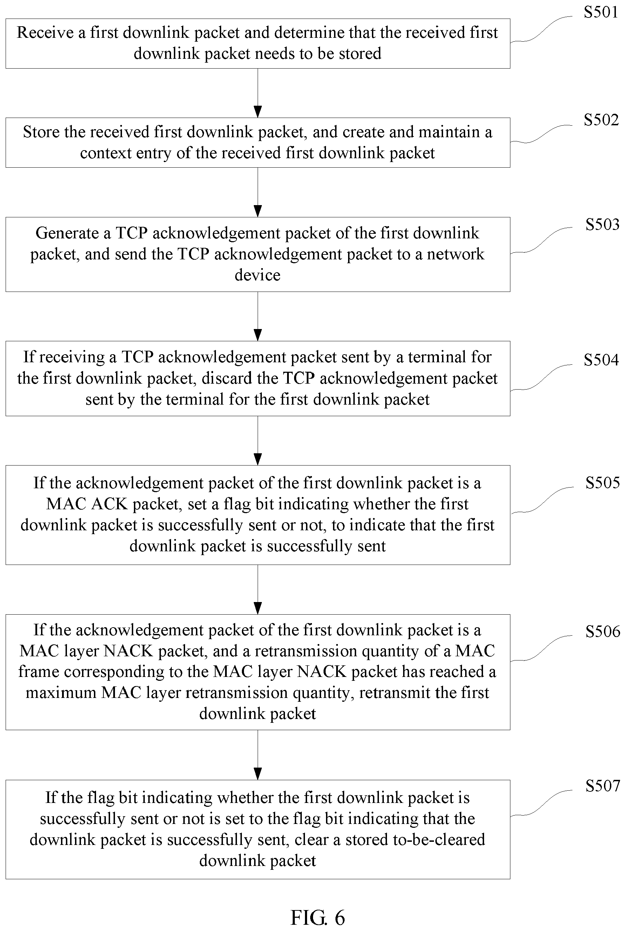

In a fourth embodiment of this application, after determining that a first downlink packet that is sent by a network device and that is correctly received is stored, CPE may generate a TCP acknowledgement packet of the stored first downlink packet, and send the TCP acknowledgement packet to the network device. After sending the TCP acknowledgement packet of the first downlink packet to the network device, if receiving a TCP acknowledgement packet sent by a terminal for the first downlink packet, the CPE discards the TCP acknowledgement packet sent by the terminal for the first downlink packet. For a specific implementation process, refer to FIG. 6. The following steps are included.

S501: CPE receives a first downlink packet and determines that the received first downlink packet needs to be stored.

S502: The CPE stores the received first downlink packet, and creates and maintains a context entry of the received first downlink packet.

The created and maintained context entry of the first downlink packet in this embodiment of this application may be shown in Table 3.

**Table 3**

| **Sequence number of a first downlink packet** | **Identifier of a first downlink packet** | **Frame number of a MAC layer frame into which a first downlink packet is encapsulated** | **Flag bit indicating whether a first downlink packet is successfully sent or not** |
|---|---|---|---|
| A value of the sequence number ranges from 0 to N. Based on a receiving sequence, CPE increases the sequence number of the packet by 1 each time a TCP packet is received. | A TCP link identifier <a source IP address, a destination IP address, a source port number, a destination port number, and a version>, a TCP sequence number, and a length (Length) | A frame number of a MAC layer frame, Which is updated after each MAC layer encapsulation | An initial value is false. When it is determined that the first downlink packet is correctly received, a value is set to true. |

In this embodiment of this application, if the created uplink/downlink entry of the first downlink packet already exists, a latest uplink/downlink entry may be used to replace corresponding content in the existing entry.

S503: The CPE generates a TCP acknowledgement packet of the stored first downlink packet and sends the TCP acknowledgement packet to a network device.

S504: If receiving a TCP acknowledgement packet sent by a terminal for the first downlink packet, the CPE discards the TCP acknowledgement packet sent by the terminal for the first downlink packet.

S505: If an acknowledgement packet that is sent by the terminal for the first downlink packet and that is received by the CPE is a MAC positive acknowledgement packet, set a flag bit indicating whether the first downlink packet is successfully sent or not, to indicate that the first downlink packet is successfully sent, for example, set the flag bit to true.

S506: If an acknowledgement packet that is sent by the terminal for the first downlink packet and that is received by the CPE is a MAC layer NACK packet, and a retransmission quantity of a MAC frame corresponding to the MAC layer NACK packet has reached a maximum MAC layer retransmission quantity, retransmit the first downlink packet.

S507: If the CPE determines that the flag bit indicating whether the first downlink packet is successfully sent or not is set to indicate that the first downlink packet is successfully sent, the CPE clears another first downlink packet and a context entry of the another first downlink packet that are stored in the CPE, where the another first downlink packet is on a same TCP link as the first downlink packet and has a TCP sequence number less than a TCP sequence number of the first downlink packet.

The foregoing mainly describes the solutions provided in the embodiments of this application from a perspective of interaction between the CPE and the terminal and between the CPE and the network device. It can be understood that, to implement the foregoing functions, the CPE includes corresponding hardware structures and/or software modules for performing the functions. Units and algorithm steps in examples described with reference to the embodiments disclosed in this application can be implemented in a form of hardware or in a form of a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, the CPE may be divided into functional units according to the foregoing method examples. For example, various functional units corresponding to various functions may be obtained through division, or two or more functions may be integrated into one processing unit. The integrated unit may be implemented in a form of hardware, or may be implemented in a form of a software functional unit. It should be noted that, in the embodiments of this application, unit division is an example, and is merely logical function division. In actual implementation, another division manner may be used.

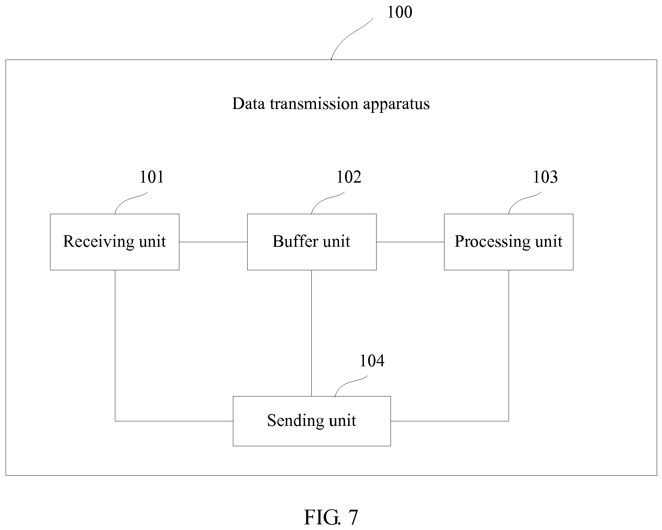

When an integrated unit is used, FIG. 7 is a schematic structural diagram of a data transmission apparatus according to this application. As shown in FIG. 7, the data transmission apparatus 100 includes a receiving unit 101, a buffer unit 102, a processing unit 103, and a sending unit 104. The receiving unit 101 is configured to: receive a first downlink packet sent by a network device and receive an acknowledgement packet sent by a terminal for the first downlink packet. The sending unit 104 is configured to send the first downlink packet received by the receiving unit 101 to the terminal. The buffer unit 102 is configured to store the first downlink packet. The processing unit 103 is configured to: create and maintain a context entry of the first downlink packet, and after the receiving unit 101 receives the acknowledgement packet sent by the terminal for the first downlink packet, update the context entry of the first downlink packet, determine, based on the context entry of the first downlink packet, whether the first downlink packet needs to be retransmitted, and determine, based on the context entry of the first downlink packet, whether a first downlink packet and a context entry of the first downlink packet that are stored in the buffer unit 102 need to be cleared. If the processing unit 103 determines, based on the context entry of the first downlink packet, that the first downlink packet needs to be retransmitted, the sending unit 104 is configured to retransmit the stored first downlink packet to the terminal. If the processing unit 103 determines, based on the context entry of the first downlink packet, that a stored to-be-cleared downlink packet and a stored context entry of the to-be-cleared downlink packet need to be cleared, the buffer unit 102 clears the to-be-cleared downlink packet and the context entry of the to-be-cleared downlink packet that are stored in the CPE. The to-be-cleared downlink packet and the first downlink packet belong to a same transmission control protocol TCP link, and a TCP sequence number of the to-be-cleared downlink packet is less than a TCP sequence number of the first downlink packet.

In a possible implementation, the buffer unit 102 is further configured to: before storing the first downlink packet, determine that the first downlink packet is a TCP packet, and that a buffer size of the buffer unit 102 is less than a preset buffer size, or that a buffer size of the buffer unit 102 is equal to a preset buffer size and in buffered downlink packets, there is a second downlink packet with a service priority lower than a service priority of the received first downlink packet.

In a possible implementation, the context entry of the first downlink packet includes a sequence number of the first downlink packet, an identifier of the first downlink packet, and an acknowledgement packet count of the first downlink packet, and the identifier of the first downlink packet includes the TCP sequence number.

In a possible implementation, if the acknowledgement packet that is sent by the terminal for the first downlink packet and that is received by the receiving unit 101 is a TCP acknowledgement packet, the processing unit 103 increases a value of the acknowledgement packet count in the context entry of the first downlink packet by 1, to update the context entry of the first downlink packet. If the processing unit 103 determines that the value of the acknowledgement packet count of the first downlink packet is a predetermined acknowledgement packet count value or determines that the TCP packet is not stored in the buffer unit 102, the processing unit 103 determines that the to-be-cleared downlink packet and the context entry of the to-be-cleared downlink packet that are stored in the buffer unit 102 need to be cleared.

In a possible implementation, if the processing unit 103 determines that the value of the acknowledgement packet count of the first downlink packet is equal to a first retransmission threshold, the processing unit 103 determines that the first downlink packet needs to be retransmitted. The processing unit 103 is further configured to: after the sending unit 104 retransmits the stored first downlink packet to the terminal, set the value of the acknowledgement packet count of the first downlink packet to 0.

In a possible implementation, the sending unit 104 is further configured to: after the processing unit 103 updates the context entry of the first downlink packet, if the processing unit 103 determines that the value of the acknowledgement packet count of the first downlink packet is equal to a first forwarding threshold, forward the TCP acknowledgement packet to the network device.

In a possible implementation, if the processing unit 103 determines that the value of the acknowledgement packet count of the first downlink packet is greater than a second retransmission threshold, the processing unit 103 determines that the first downlink packet needs to be retransmitted.

In a possible implementation, the processing unit 103 is further configured to: after updating the context entry of the first downlink packet, if determining that the value of the acknowledgement packet count of the first downlink packet is greater than the second retransmission threshold, determine whether the value of the acknowledgement packet count of the first downlink packet is less than a second forwarding threshold; and when determining that the value of the acknowledgement packet count of the first downlink packet is not less than the second forwarding threshold, further determine whether the value of the acknowledgement packet count of the first downlink packet is a positive integer multiple of the second forwarding threshold.

The buffer unit 102 is further configured to: if the processing unit 103 determines that the value of the acknowledgement packet count of the first downlink packet is less than the second forwarding threshold, store the TCP acknowledgement packet. The sending unit 104 is further configured to: if the processing unit 103 determines that the value of the acknowledgement packet count of the first downlink packet is not less than the second forwarding threshold, send all stored TCP acknowledgement packets of the first downlink packet to the network device; or if the processing unit 103 determines that the value of the acknowledgement packet count of the first downlink packet is not less than the second forwarding threshold and that the value of the acknowledgement packet count of the first downlink packet is a positive integer multiple of the second forwarding threshold, send instruction information to the network device, where the instruction information is used to instruct the network device not to reduce a TCP send window.

In a possible implementation, the context entry of the first downlink packet includes a sequence number of the first downlink packet, an identifier of the first downlink packet, a frame number of a MAC layer frame into which the first downlink packet is encapsulated, a retransmission count of the first downlink packet, and a flag bit indicating whether the first downlink packet is successfully sent or not, and the identifier of the first downlink packet includes the TCP sequence number.

If determining that the acknowledgement packet that is sent by the terminal for the first downlink packet and that is received by the receiving unit 101 is a MAC layer ACK packet, the processing unit 103 sets the flag bit used to indicate whether the first downlink packet is successfully sent or not, to indicate that the first downlink packet has been successfully sent. If determining that the acknowledgement packet that is sent by the terminal for the first downlink packet and that is received by the receiving unit 101 is a MAC layer negative acknowledgement NACK packet, and a retransmission quantity of a MAC frame corresponding to the MAC layer NACK packet has reached a maximum MAC layer retransmission quantity, the processing unit 103 increases a value of the retransmission count in the context entry of the first downlink packet by 1. The processing unit 103 determines, based on the context entry of the first downlink packet, that the stored to-be-cleared downlink packet and the stored context entry of the to-be-cleared downlink packet need to be cleared, in the following manner:
if determining that the flag bit indicating whether the first downlink packet is successfully sent or not is set to indicate that the first downlink packet has been successfully sent, determining that the to-be-cleared downlink packet and the context entry of the to-be-cleared downlink packet that are stored in the buffer unit 102 need to be cleared.

If determining that the value of the retransmission count is greater than a third retransmission threshold, the processing unit 103 determines that the first downlink packet needs to be retransmitted. The processing unit 103 is further configured to: after the sending unit 104 retransmits the first downlink packet to the terminal, update the MAC frame number in the context entry with a new MAC layer frame number after MAC layer encapsulation.

In a possible implementation, the processing unit 103 is further configured to: after updating the context entry of the first downlink packet, if determining that the value of the retransmission count is greater than the third retransmission threshold, determine whether the value of the retransmission count is less than a third forwarding threshold; and when determining that the value of the retransmission count is not less than the third forwarding threshold, further determine whether a value of an acknowledgement packet count of the first downlink packet is a positive integer multiple of the third forwarding threshold. The buffer unit 102 is further configured to: if the processing unit 103 determines that the value of the retransmission count is less than the third forwarding threshold, store a received TCP acknowledgement packet of the first downlink packet. The sending unit 104 is further configured to: if the processing unit 103 determines that the value of the retransmission count is not less than the third forwarding threshold, send all stored TCP acknowledgement packets of the first downlink packet to the network device; or if the processing unit 103 determines that the value of the retransmission count is not less than the third forwarding threshold and that a value of an acknowledgement packet count of the first downlink packet is a positive integer multiple of the third forwarding threshold, send instruction information to the network device, where the instruction information is used to instruct the network device not to reduce a TCP send window.

In a possible implementation, the sending unit 104 is further configured to: after the buffer unit 102 stores the first downlink packet, send a TCP acknowledgement packet of the first downlink packet to the network device.

In a possible implementation, the receiving unit 101 is further configured to: after the sending unit 104 sends the TCP acknowledgement packet of the first downlink packet to the network device, if receiving a TCP acknowledgement packet sent by the terminal for the first downlink packet, discard the TCP acknowledgement packet sent by the terminal for the first downlink packet.

When a hardware form is used for implementation, in this embodiment of this application, the receiving unit 101 may be a communications interface, a receiver, a transceiver circuit, or the like; the buffer unit 102 may be a memory; the processing unit 103 may be a processor or a controller; and the sending unit 104 may be a communications interface, a transmitter, a transceiver circuit, or the like. The communications interface is a collective name and may include one or more interfaces.

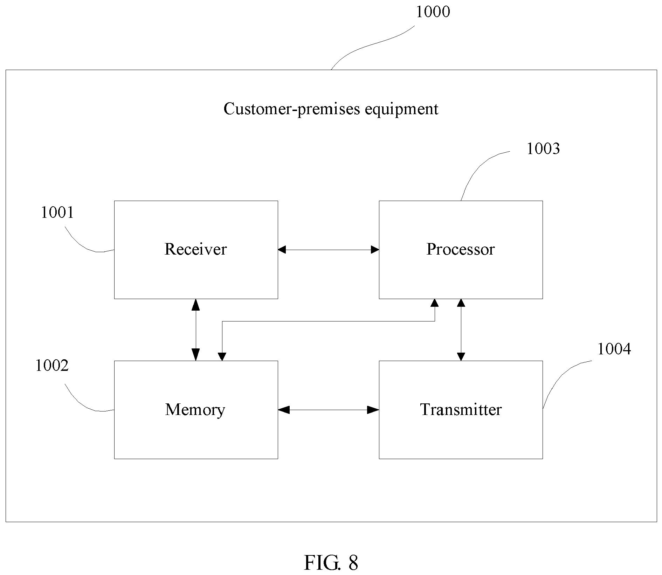

When the receiving unit 101 is a receiver, the buffer unit 102 is a memory, the processing unit 103 is a processor, and the sending unit 104 is a transmitter, the data transmission apparatus 100 in this embodiment of this application may be customer-premises equipment shown in FIG. 8. The customer-premises equipment shown in FIG. 8 may be CPE.

FIG. 8 is a schematic structural diagram of customer-premises equipment 1000 according to an embodiment of this application, namely, a schematic structural diagram of another possible data transmission apparatus according to an embodiment of this application. As shown in FIG. 8, the customer-premises equipment 1000 includes a receiver 1001, a memory 1002, a processor 1003, and a transmitter 1004. The memory 1002 is configured to store an instruction. The processor 1003 is configured to execute the instruction stored in the memory 1002, to perform the following functions of the processor 1003 and control the receiver 1001, the memory 1002, and the transmitter 1004 to perform the following functions:

The receiver 1001 is configured to: receive a first downlink packet sent by a network device and receive an acknowledgement packet sent by a terminal for the first downlink packet. The transmitter 1004 is configured to transmit the first downlink packet received by the receiver 1001 to the terminal. The memory 1002 is configured to store the first downlink packet. The processor 1003 is configured to: create and maintain a context entry of the first downlink packet, and after the receiver 1001 receives the acknowledgement packet sent by the terminal for the first downlink packet, update the context entry of the first downlink packet, determine, based on the context entry of the first downlink packet, whether the first downlink packet needs to be retransmitted, and determine, based on the context entry of the first downlink packet, whether a first downlink packet and a context entry of the first downlink packet that are stored in the memory 1002 need to be cleared. If the processor 1003 determines, based on the context entry of the first downlink packet, that the first downlink packet needs to be retransmitted, the transmitter 1004 is configured to retransmit the stored first downlink packet to the terminal. If the processor 1003 determines, based on the context entry of the first downlink packet, that a stored to-be-cleared downlink packet and a stored context entry of the to-be-cleared downlink packet need to be cleared, the memory 1002 clears the to-be-cleared downlink packet and the context entry of the to-be-cleared downlink packet that are stored in the CPE. The to-be-cleared downlink packet and the first downlink packet belong to a same transmission control protocol TCP link, and a TCP sequence number of the to-be-cleared downlink packet is less than a TCP sequence number of the first downlink packet.

In a possible implementation, the memory 1002 is further configured to: before storing the first downlink packet, determine that the first downlink packet is a TCP packet, and that a buffer size of the memory 1002 is less than a preset buffer size, or that a buffer size of the memory 1002 is equal to a preset buffer size and in buffered downlink packets, there is a second downlink packet with a service priority lower than a service priority of the received first downlink packet.

In a possible implementation, the context entry of the first downlink packet includes a sequence number of the first downlink packet, an identifier of the first downlink packet, and an acknowledgement packet count of the first downlink packet, and the identifier of the first downlink packet includes the TCP sequence number.

In a possible implementation, the processor 1003 updates the context entry of the first downlink packet in the following manner: if the acknowledgement packet that is sent by the terminal for the first downlink packet and that is received by the receiver 1001 is a TCP acknowledgement packet, increasing a value of the acknowledgement packet count in the context entry of the first downlink packet by 1. The processor 1003 determines, based on the context entry of the first downlink packet, that the stored to-be-cleared downlink packet and the stored context entry of the to-be-cleared downlink packet need to be cleared, in the following manner: if determining that the value of the acknowledgement packet count of the first downlink packet is a predetermined acknowledgement packet count value or determining that the TCP packet is not stored in the memory 1002, determining that the to-be-cleared downlink packet and the context entry of the to-be-cleared downlink packet that are stored in the memory 1002 need to be cleared.

In a possible implementation, the processor 1003 determines, based on the context entry of the first downlink packet, that the first downlink packet needs to be retransmitted, in the following manner: if determining that the value of the acknowledgement packet count of the first downlink packet is equal to a first retransmission threshold, determining that the first downlink packet needs to be retransmitted. The processor 1003 is further configured to: after the transmitter 1004 retransmits the stored first downlink packet to the terminal, set the value of the acknowledgement packet count of the first downlink packet to 0.

In a possible implementation, the transmitter 1004 is further configured to: after the processor 1003 updates the context entry of the first downlink packet, if the processor 1003 determines that the value of the acknowledgement packet count of the first downlink packet is equal to a first forwarding threshold, forward the TCP acknowledgement packet to the network device.

In a possible implementation, the processor 1003 determines, based on the context entry of the first downlink packet, that the first downlink packet needs to be retransmitted, in the following manner: if determining that the value of the acknowledgement packet count of the first downlink packet is greater than a second retransmission threshold, determining that the first downlink packet needs to be retransmitted.

In a possible implementation, the processor 1003 is further configured to: after updating the context entry of the first downlink packet, if determining that the value of the acknowledgement packet count of the first downlink packet is greater than the second retransmission threshold, determine whether the value of the acknowledgement packet count of the first downlink packet is less than a second forwarding threshold; and when determining that the value of the acknowledgement packet count of the first downlink packet is not less than the second forwarding threshold, further determine whether the value of the acknowledgement packet count of the first downlink packet is a positive integer multiple of the second forwarding threshold. The memory 1002 is further configured to: if the processor 1003 determines that the value of the acknowledgement packet count of the first downlink packet is less than the second forwarding threshold, store the TCP acknowledgement packet. The transmitter 1004 is further configured to: if the processor 1003 determines that the value of the acknowledgement packet count of the first downlink packet is not less than the second forwarding threshold, send all stored TCP acknowledgement packets of the first downlink packet to the network device; or if the processor 1003 determines that the value of the acknowledgement packet count of the first downlink packet is not less than the second forwarding threshold and that the value of the acknowledgement packet count of the first downlink packet is a positive integer multiple of the second forwarding threshold, send instruction information to the network device, where the instruction information is used to instruct the network device not to reduce a TCP send window.

In a possible implementation, the context entry of the first downlink packet includes a sequence number of the first downlink packet, an identifier of the first downlink packet, a frame number of a media access control MAC layer frame into which the first downlink packet is encapsulated, a retransmission count of the first downlink packet, and a flag bit indicating whether the first downlink packet is successfully sent or not, and the identifier of the first downlink packet includes the TCP sequence number. The processor 1003 updates the context entry of the first downlink packet in the following manner: if the acknowledgement packet that is sent by the terminal for the first downlink packet and that is received by the receiver 1001 is a MAC layer ACK packet, setting the flag bit used to indicate whether the first downlink packet is successfully sent or not, to indicate that the first downlink packet has been successfully sent; or if the acknowledgement packet that is sent by the terminal for the first downlink packet and that is received by the CPE is a MAC layer negative acknowledgement NACK packet, and a retransmission quantity of a MAC frame corresponding to the MAC layer NACK packet has reached a maximum MAC layer retransmission quantity, increasing a value of the retransmission count in the context entry of the first downlink packet by 1. The processor 1003 determines, based on the context entry of the first downlink packet, that the stored to-be-cleared downlink packet and the stored context entry of the to-be-cleared downlink packet need to be cleared, in the following manner: if determining that the flag bit indicating whether the first downlink packet is successfully sent or not is set to indicate that the first downlink packet has been successfully sent, determining that the to-be-cleared downlink packet and the context entry of the to-be-cleared downlink packet that are stored in the memory 1002 need to be cleared. The processor 1003 determines, based on the context entry of the first downlink packet, that the first downlink packet needs to be retransmitted, in the following manner: if determining that the value of the retransmission count is greater than a third retransmission threshold, determining that the first downlink packet needs to be retransmitted. The processor 1003 is further configured to: after the transmitter 1004 retransmits the first downlink packet to the terminal, update the MAC frame number in the context entry with a new MAC layer frame number after MAC layer encapsulation.

In a possible implementation, the processor 1003 is further configured to: after updating the context entry of the first downlink packet, if determining that the value of the retransmission count is greater than the third retransmission threshold, determine whether the value of the retransmission count is less than a third forwarding threshold; and when determining that the value of the retransmission count is not less than the third forwarding threshold, further determine whether a value of an acknowledgement packet count of the first downlink packet is a positive integer multiple of the third forwarding threshold. The memory 1002 is further configured to: if the processor 1003 determines that the value of the retransmission count is less than the third forwarding threshold, store a received TCP acknowledgement packet of the first downlink packet. The transmitter 1004 is further configured to: if the processor 1003 determines that the value of the retransmission count is not less than the third forwarding threshold, send all stored TCP acknowledgement packets of the first downlink packet to the network device; or if the processor 1003 determines that the value of the retransmission count is not less than the third forwarding threshold and that a value of an acknowledgement packet count of the first downlink packet is a positive integer multiple of the third forwarding threshold, send instruction information to the network device, where the instruction information is used to instruct the network device not to reduce a TCP send window.

In a possible implementation, the transmitter 1004 is further configured to: after the memory 1002 stores the first downlink packet, send a TCP acknowledgement packet of the first downlink packet to the network device.

In a possible implementation, the receiver 1001 is further configured to: after the transmitter 1004 sends the TCP acknowledgement packet of the first downlink packet to the network device, if receiving a TCP acknowledgement packet sent by the terminal for the first downlink packet, discard the TCP acknowledgement packet sent by the terminal for the first downlink packet.

In the embodiments of this application, for other steps and concepts, explanations, and detailed descriptions of the data transmission apparatus 100 and the customer-premises equipment 1000 related to the technical solutions provided in the embodiments of this application, refer to descriptions about the content in the foregoing method embodiments or other embodiments. Details are not described herein again.

It can be understood that the accompanying drawings of the embodiments of this application merely show simplified designs of the network device and the terminal. In actual application, the network device and the terminal are not limited to the foregoing structures. For example, the terminal may further include a display device, an input/output interface, and the like. Any terminal that can implement the embodiments of this application falls within the protection scope of the embodiments of this application. The network device may further include any quantity of transmitters, receivers, processors, controllers, memories, communications units, and the like. Any network device that can implement the embodiments of this application falls within the protection scope of the embodiments of this application.

It should be noted that the foregoing processor in the embodiments of this application may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or a combination thereof. The processor may implement or execute various example logical blocks, modules, and circuits described with reference to content disclosed in this application. Alternatively, the processor may be a combination of processors implementing a computing function, for example, a combination of one or more microprocessors, a combination of a DSP and a microprocessor, or the like.

The memory may be integrated into the processor or may be disposed separately from the processor.

In an implementation, functions of the receiver and the transmitter may be implemented by using a transceiver circuit or a dedicated transceiver chip. The processor may be implemented by using a dedicated processing chip, a processing circuit, a processor, or a general-purpose chip.

In another implementation, program code for implementing functions of the processor, the receiver, and the transmitter is stored in the memory, and a general purpose processor executes the code in the memory to implement the functions of the processor, the receiver, and the transmitter.

According to the method provided in the embodiments of this application, an embodiment of this application further provides a communications system. The communications system includes the foregoing customer-premises equipment, a network device, and one or more terminals.

An embodiment of this application further provides a computer storage medium, configured to store some instructions. When these instructions are executed, any method related to the foregoing CPE can be implemented.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a magnetic disk storage, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A data transmission method, comprising:
receiving, by customer-premises equipment CPE, a first downlink packet sent by a network device, storing the first downlink packet, creating and maintaining a context entry of the first downlink packet, and sending the first downlink packet to a terminal;
receiving, by the CPE, an acknowledgement packet sent by the terminal for the first downlink packet, and updating the context entry of the first downlink packet;
if determining, based on the context entry of the first downlink packet, that the first downlink packet needs to be retransmitted, retransmitting, by the CPE, the stored first downlink packet to the terminal; and
if determining, based on the context entry of the first downlink packet, that a stored to-be-cleared downlink packet and a stored context entry of the to-be-cleared downlink packet need to be cleared, clearing, by the CPE, the to-be-cleared downlink packet and the context entry of the to-be-cleared downlink packet, wherein the to-be-cleared downlink packet and the first downlink packet belong to a same transmission control protocol TCP link, and a TCP sequence number of the to-be-cleared downlink packet is less than a TCP sequence number of the first downlink packet.

2. The method according to claim 1, wherein before the storing the first downlink packet, the method further comprises:
determining that the first downlink packet is a TCP packet, and
that a buffer size of the CPE is less than a preset buffer size, or that a buffer size of the CPE is equal to a preset buffer size and in buffered downlink packets, there is a second downlink packet with a service priority lower than a service priority of the received first downlink packet.

3. The method according to claim 1 or 2, wherein the context entry of the first downlink packet comprises a sequence number of the first downlink packet, an identifier of the first downlink packet, and an acknowledgement packet count of the first downlink packet, and the identifier of the first downlink packet comprises the TCP sequence number.

4. The method according to any one of claims 1 to 3, wherein the receiving, by the CPE, an acknowledgement packet sent by the terminal for the first downlink packet, and updating the context entry of the first downlink packet comprises:
if the acknowledgement packet that is sent by the terminal for the first downlink packet and that is received by the CPE is a TCP acknowledgement packet, increasing a value of the acknowledgement packet count in the context entry of the first downlink packet by 1; and
the determining, by the CPE based on the context entry of the first downlink packet, that a stored to-be-cleared downlink packet and a stored context entry of the to-be-cleared downlink packet need to be cleared comprises:
if the CPE determines that the value of the acknowledgement packet count of the first downlink packet is a predetermined acknowledgement packet count value or determines that the TCP packet is not stored in the CPE, determining, by the CPE, that the to-be-cleared downlink packet and the context entry of the to-be-cleared downlink packet need to be cleared.

5. The method according to claim 3 or 4, wherein the determining, by the CPE based on the context entry of the first downlink packet, that the first downlink packet needs to be retransmitted comprises:
if the CPE determines that the value of the acknowledgement packet count of the first downlink packet is equal to a first retransmission threshold, determining, by the CPE, that the first downlink packet needs to be retransmitted; and
after the retransmitting, by the CPE, the stored first downlink packet to the terminal, the method further comprises:
setting, by the CPE, the value of the acknowledgement packet count of the first downlink packet to 0.

6. The method according to any one of claims 3 to 5, wherein after the updating the context entry of the first downlink packet, the method further comprises:
if the CPE determines that the value of the acknowledgement packet count of the first downlink packet is equal to a first forwarding threshold, forwarding, by the CPE, the TCP acknowledgement packet to the network device.

7. The method according to claim 3, wherein the determining, by the CPE based on the context entry of the first downlink packet, that the first downlink packet needs to be retransmitted comprises:
if the CPE determines that a value of the acknowledgement packet count of the first downlink packet is greater than a second retransmission threshold, determining, by the CPE, that the first downlink packet needs to be retransmitted.

8. The method according to claim 3 or 7, wherein after the updating the context entry of the first downlink packet, the method further comprises:
if determining that the value of the acknowledgement packet count of the first downlink packet is greater than the second retransmission threshold, determining, by the CPE, whether the value of the acknowledgement packet count of the first downlink packet is less than a second forwarding threshold; and
if the value of the acknowledgement packet count of the first downlink packet is less than the second forwarding threshold, storing, by the CPE, the TCP acknowledgement packet; or
if the value of the acknowledgement packet count of the first downlink packet is not less than the second forwarding threshold, sending, by the CPE, all stored TCP acknowledgement packets of the first downlink packet to the network device; or if the value of the acknowledgement packet count of the first downlink packet is not less than the second forwarding threshold and the CPE determines that the value of the acknowledgement packet count of the first downlink packet is a positive integer multiple of the second forwarding threshold,
sending, by the CPE, instruction information to the network device, wherein the instruction information is used to instruct the network device not to reduce a TCP send window.

9. The method according to claim 1 or 2, wherein the context entry of the first downlink packet comprises a sequence number of the first downlink packet, an identifier of the first downlink packet, a frame number of a media access control MAC layer frame into which the first downlink packet is encapsulated, a retransmission count of the first downlink packet, and a flag bit indicating whether the first downlink packet is successfully sent or not, and the identifier of the first downlink packet comprises the TCP sequence number;
the receiving, by the CPE, an acknowledgement packet sent by the terminal for the first downlink packet, and updating the context entry of the first downlink packet comprises:
if the acknowledgement packet that is sent by the terminal for the first downlink packet and that is received by the CPE is a MAC positive acknowledgement ACK packet, setting the flag bit used to indicate whether the first downlink packet is successfully sent or not, to indicate that the first downlink packet has been successfully sent;
if the acknowledgement packet that is sent by the terminal for the first downlink packet and that is received by the CPE is a MAC layer negative acknowledgement NACK packet, and a retransmission quantity of a MAC frame corresponding to the MAC layer negative acknowledgement NACK packet has reached a maximum MAC layer retransmission quantity, increasing a value of the retransmission count in the context entry of the first downlink packet by 1;
the determining, by the CPE based on the context entry of the first downlink packet, that a stored to-be-cleared downlink packet and a stored context entry of the to-be-cleared downlink packet need to be cleared comprises:
if the CPE determines that the flag bit indicating whether the first downlink packet is successfully sent or not is set to indicate that the first downlink packet has been successfully sent, determining, by the CPE, that the stored to-be-cleared downlink packet and the stored context entry of the to-be-cleared downlink packet need to be cleared;
the determining, by the CPE based on the context entry of the first downlink packet, that the first downlink packet needs to be retransmitted comprises:
if the CPE determines that the value of the retransmission count is greater than a third retransmission threshold, determining, by the CPE, that the first downlink packet needs to be retransmitted; and
after the retransmitting, by the CPE, the first downlink packet to the terminal, the method further comprises:
updating, by the CPE, the MAC frame number in the context entry with a new MAC layer frame number after MAC layer encapsulation.

10. The method according to claim 1, 2, or 9, wherein after the updating the context entry of the first downlink packet, the method further comprises:
if determining that the value of the retransmission count is greater than the third retransmission threshold, determining, by the CPE, whether the value of the retransmission count is less than a third forwarding threshold; and
if the value of the retransmission count is less than the third forwarding threshold, storing, by the CPE, a received TCP acknowledgement packet of the first downlink packet; or
if the value of the retransmission count is not less than the third forwarding threshold, sending, by the CPE, all stored TCP acknowledgement packets of the first downlink packet to the network device; or if the value of the retransmission count is not less than the third forwarding threshold and the CPE determines that a value of an acknowledgement packet count of the first downlink packet is a positive integer multiple of the third forwarding threshold,
sending, by the CPE, instruction information to the network device, wherein the instruction information is used to instruct the network device not to reduce a TCP send window.

11. The method according to claim 1, 2, or 9, wherein after the storing the first downlink packet, the method further comprises:
generating a TCP acknowledgement packet of the stored first downlink packet, and sending the TCP acknowledgement packet to the network device.

12. The method according to claim 11, wherein after the sending the TCP acknowledgement packet of the first downlink packet to the network device, the method further comprises:
if receiving a TCP acknowledgement packet sent by the terminal for the first downlink packet, discarding the TCP acknowledgement packet sent by the terminal for the first downlink packet.

13. A data transmission apparatus, comprising a receiving unit, a buffer unit, a processing unit, and a sending unit, wherein
the receiving unit is configured to: receive a first downlink packet sent by a network device and receive an acknowledgement packet sent by a terminal for the first downlink packet;
the sending unit is configured to send the first downlink packet received by the receiving unit to the terminal;
the buffer unit is configured to store the first downlink packet;
the processing unit is configured to: create and maintain a context entry of the first downlink packet, and after the receiving unit receives the acknowledgement packet sent by the terminal for the first downlink packet, update the context entry of the first downlink packet, determine, based on the context entry of the first downlink packet, whether the first downlink packet needs to be retransmitted, and determine, based on the context entry of the first downlink packet, whether a first downlink packet and a context entry of the first downlink packet that are stored in the buffer unit need to be cleared;
if the processing unit determines, based on the context entry of the first downlink packet, that the first downlink packet needs to be retransmitted, the sending unit is configured to retransmit the stored first downlink packet to the terminal; and
if the processing unit determines, based on the context entry of the first downlink packet, that a stored to-be-cleared downlink packet and a stored context entry of the to-be-cleared downlink packet need to be cleared, the buffer unit clears the to-be-cleared downlink packet and the context entry of the to-be-cleared downlink packet, wherein the to-be-cleared downlink packet and the first downlink packet belong to a same transmission control protocol TCP link, and a TCP sequence number of the to-be-cleared downlink packet is less than a TCP sequence number of the first downlink packet.

14. The apparatus according to claim 13, wherein the buffer unit is further configured to:
before storing the first downlink packet, determine that the first downlink packet is a TCP packet, and
that a buffer size of the buffer unit is less than a preset buffer size, or that a buffer size of the buffer unit is equal to a preset buffer size and in buffered downlink packets, there is a second downlink packet with a service priority lower than a service priority of the received first downlink packet.

15. The apparatus according to claim 13 or 14, wherein the context entry of the first downlink packet comprises a sequence number of the first downlink packet, an identifier of the first downlink packet, and an acknowledgement packet count of the first downlink packet, and the identifier of the first downlink packet comprises the TCP sequence number.

16. The apparatus according to any one of claims 13 to 15, wherein the processing unit updates the context entry of the first downlink packet in the following manner:
if the acknowledgement packet that is sent by the terminal for the first downlink packet and that is received by the receiving unit is a TCP acknowledgement packet, increasing a value of the acknowledgement packet count in the context entry of the first downlink packet by 1; and
the processing unit determines, based on the context entry of the first downlink packet, that the stored to-be-cleared downlink packet and the stored context entry of the to-be-cleared downlink packet need to be cleared, in the following manner:
if determining that the value of the acknowledgement packet count of the first downlink packet is a predetermined acknowledgement packet count value or determining that the TCP packet is not stored in the buffer unit, determining that the to-be-cleared downlink packet and the context entry of the to-be-cleared downlink packet that are stored in the buffer unit need to be cleared.

17. The apparatus according to claim 15 or 16, wherein the processing unit determines, based on the context entry of the first downlink packet, that the first downlink packet needs to be retransmitted, in the following manner:
if determining that the value of the acknowledgement packet count of the first downlink packet is equal to a first retransmission threshold, determining that the first downlink packet needs to be retransmitted; and
the processing unit is further configured to:
after the sending unit retransmits the stored first downlink packet to the terminal, set the value of the acknowledgement packet count of the first downlink packet to 0.

18. The apparatus according to any one of claims 15 to 17, wherein the sending unit is further configured to:
after the processing unit updates the context entry of the first downlink packet, if the processing unit determines that the value of the acknowledgement packet count of the first downlink packet is equal to a first forwarding threshold, forward the TCP acknowledgement packet to the network device.

19. The apparatus according to claim 15, wherein the processing unit determines, based on the context entry of the first downlink packet, that the first downlink packet needs to be retransmitted, in the following manner:
if determining that the value of the acknowledgement packet count of the first downlink packet is greater than a second retransmission threshold, determining that the first downlink packet needs to be retransmitted.

20. The apparatus according to claim 15 or 19, wherein the processing unit is further configured to:
after updating the context entry of the first downlink packet, if determining that the value of the acknowledgement packet count of the first downlink packet is greater than the second retransmission threshold, determine whether the value of the acknowledgement packet count of the first downlink packet is less than a second forwarding threshold; and when determining that the value of the acknowledgement packet count of the first downlink packet is not less than the second forwarding threshold, further determine whether the value of the acknowledgement packet count of the first downlink packet is a positive integer multiple of the second forwarding threshold;
the buffer unit is further configured to:
if the processing unit determines that the value of the acknowledgement packet count of the first downlink packet is less than the second forwarding threshold, store the TCP acknowledgement packet; and
the sending unit is further configured to:
if the processing unit determines that the value of the acknowledgement packet count of the first downlink packet is not less than the second forwarding threshold, send all stored TCP acknowledgement packets of the first downlink packet to the network device; or if the processing unit determines that the value of the acknowledgement packet count of the first downlink packet is not less than the second forwarding threshold and that the value of the acknowledgement packet count of the first downlink packet is a positive integer multiple of the second forwarding threshold, send instruction information to the network device, wherein the instruction information is used to instruct the network device not to reduce a TCP send window.

21. The apparatus according to claim 13 or 14, wherein the context entry of the first downlink packet comprises a sequence number of the first downlink packet, an identifier of the first downlink packet, a frame number of a media access control MAC layer frame into which the first downlink packet is encapsulated, a retransmission count of the first downlink packet, and a flag bit indicating whether the first downlink packet is successfully sent or not, and the identifier of the first downlink packet comprises the TCP sequence number;
the processing unit updates the context entry of the first downlink packet in the following manner:
if the acknowledgement packet that is sent by the terminal for the first downlink packet and that is received by the receiving unit is a MAC positive acknowledgement ACK packet, setting the flag bit used to indicate whether the first downlink packet is successfully sent or not, to indicate that the first downlink packet has been successfully sent; or
if the acknowledgement packet that is sent by the terminal for the first downlink packet and that is received by the receiving unit is a MAC layer negative acknowledgement NACK packet, and a retransmission quantity of a MAC frame corresponding to the MAC layer negative acknowledgement NACK packet has reached a maximum MAC layer retransmission quantity, increasing a value of the retransmission count in the context entry of the first downlink packet by 1;
the processing unit determines, based on the context entry of the first downlink packet, that the stored to-be-cleared downlink packet and the stored context entry of the to-be-cleared downlink packet need to be cleared, in the following manner:
if determining that the flag bit indicating whether the first downlink packet is successfully sent or not is set to indicate that the first downlink packet has been successfully sent, determining that the to-be-cleared downlink packet and the context entry of the to-be-cleared downlink packet that are stored in the buffer unit need to be cleared;
the processing unit determines, based on the context entry of the first downlink packet, that the first downlink packet needs to be retransmitted, in the following manner:
if determining that the value of the retransmission count is greater than a third retransmission threshold, determining that the first downlink packet needs to be retransmitted; and
the processing unit is further configured to:
after the sending unit retransmits the first downlink packet to the terminal, update the MAC frame number in the context entry with a new MAC layer frame number after MAC layer encapsulation.

22. The apparatus according to claim 13, 14, or 21, wherein the processing unit is further configured to:
after updating the context entry of the first downlink packet, if determining that the value of the retransmission count is greater than the third retransmission threshold, determine whether the value of the retransmission count is less than a third forwarding threshold; and when determining that the value of the retransmission count is not less than the third forwarding threshold, further determine whether a value of an acknowledgement packet count of the first downlink packet is a positive integer multiple of the third forwarding threshold;
the buffer unit is further configured to:
if the processing unit determines that the value of the retransmission count is less than the third forwarding threshold, store a received TCP acknowledgement packet of the first downlink packet; and
the sending unit is further configured to:
if the processing unit determines that the value of the retransmission count is not less than the third forwarding threshold, send all stored TCP acknowledgement packets of the first downlink packet to the network device; or if the processing unit determines that the value of the retransmission count is not less than the third forwarding threshold and that a value of an acknowledgement packet count of the first downlink packet is a positive integer multiple of the third forwarding threshold, send instruction information to the network device, wherein the instruction information is used to instruct the network device not to reduce a TCP send window.

23. The apparatus according to claim 13, 14, or 21, wherein the sending unit is further configured to:
after the buffer unit stores the first downlink packet, send a TCP acknowledgement packet of the first downlink packet to the network device.

24. The apparatus according to claim 23, wherein the receiving unit is further configured to:
after the sending unit sends the TCP acknowledgement packet of the first downlink packet to the network device, if receiving a TCP acknowledgement packet sent by the terminal for the first downlink packet, discard the TCP acknowledgement packet sent by the terminal for the first downlink packet.

25. Customer-premises equipment, comprising a receiver, a memory, a processor, and a transmitter, wherein the memory is configured to store an instruction; and the processor is configured to execute the instruction stored in the memory, to perform the following functions of the processor and control the receiver, the memory, and the transmitter to perform the following functions:
the receiver is configured to: receive a first downlink packet sent by a network device and receive an acknowledgement packet sent by a terminal for the first downlink packet;
the transmitter is configured to transmit the first downlink packet received by the receiver;
the memory is configured to store the first downlink packet;
the processor is configured to: create and maintain a context entry of the first downlink packet, and after the receiver receives the acknowledgement packet sent by the terminal for the first downlink packet, update the context entry of the first downlink packet, determine, based on the context entry of the first downlink packet, whether the first downlink packet needs to be retransmitted, and determine, based on the context entry of the first downlink packet, whether a to-be-cleared downlink packet and a context entry of the to-be-cleared downlink packet that are stored in the memory need to be cleared, wherein the to-be-cleared downlink packet and the first downlink packet belong to a same transmission control protocol TCP link, and a TCP sequence number of the to-be-cleared downlink packet is less than a TCP sequence number of the first downlink packet;
if the processor determines, based on the context entry of the first downlink packet, that the first downlink packet needs to be retransmitted, the transmitter is configured to retransmit the stored first downlink packet to the terminal; and
if the processor determines, based on the context entry of the first downlink packet, that the stored to-be-cleared downlink packet and the stored context entry of the to-be-cleared downlink packet need to be cleared, the memory clears the to-be-cleared downlink packet and the context entry of the to-be-cleared downlink packet.

26. The customer-premises equipment according to claim 25, wherein the memory is further configured to:
before storing the first downlink packet, determine that the first downlink packet is a TCP packet, and that a buffer size of the memory is less than a preset buffer size, or that a buffer size of the memory is equal to a preset buffer size and in buffered downlink packets, there is a second downlink packet with a service priority lower than a service priority of the received first downlink packet.

27. The customer-premises equipment according to claim 25 or 26, wherein the context entry of the first downlink packet comprises a sequence number of the first downlink packet, an identifier of the first downlink packet, and an acknowledgement packet count of the first downlink packet, and the identifier of the first downlink packet comprises the TCP sequence number.

28. The customer-premises equipment according to any one of claims 25 to 27, wherein the processor updates the context entry of the first downlink packet in the following manner:
if the acknowledgement packet that is sent by the terminal for the first downlink packet and that is received by the receiver is a TCP acknowledgement packet, increasing a value of the acknowledgement packet count in the context entry of the first downlink packet by 1; and
the processor determines, based on the context entry of the first downlink packet, that the stored to-be-cleared downlink packet and the stored context entry of the to-be-cleared downlink packet need to be cleared, in the following manner:
if determining that the value of the acknowledgement packet count of the first downlink packet is a predetermined acknowledgement packet count value or determining that the TCP packet is not stored in the memory, determining that the to-be-cleared downlink packet and the context entry of the to-be-cleared downlink packet that are stored in the memory need to be cleared.

29. The customer-premises equipment according to claim 27 or 28, wherein the processor determines, based on the context entry of the first downlink packet, that the first downlink packet needs to be retransmitted, in the following manner:
if determining that the value of the acknowledgement packet count of the first downlink packet is equal to a first retransmission threshold, determining that the first downlink packet needs to be retransmitted; and
the processor is further configured to:
after the transmitter retransmits the stored first downlink packet to the terminal, set the value of the acknowledgement packet count of the first downlink packet to 0.

30. The customer-premises equipment according to any one of claims 27 to 29, wherein the transmitter is further configured to:
after the processor updates the context entry of the first downlink packet, if the processor determines that the value of the acknowledgement packet count of the first downlink packet is equal to a first forwarding threshold, forward the TCP acknowledgement packet to the network device.

31. The customer-premises equipment according to claim 27, wherein the processor determines, based on the context entry of the first downlink packet, that the first downlink packet needs to be retransmitted, in the following manner:
if determining that the value of the acknowledgement packet count of the first downlink packet is greater than a second retransmission threshold, determining that the first downlink packet needs to be retransmitted.

32. The customer-premises equipment according to claim 27 or 31, wherein the processor is further configured to:
after updating the context entry of the first downlink packet, if determining that the value of the acknowledgement packet count of the first downlink packet is greater than the second retransmission threshold, determine whether the value of the acknowledgement packet count of the first downlink packet is less than a second forwarding threshold; and when determining that the value of the acknowledgement packet count of the first downlink packet is not less than the second forwarding threshold, further determine whether the value of the acknowledgement packet count of the first downlink packet is a positive integer multiple of the second forwarding threshold;
the memory is further configured to:
if the processor determines that the value of the acknowledgement packet count of the first downlink packet is less than the second forwarding threshold, store the TCP acknowledgement packet; and
the transmitter is further configured to:
if the processor determines that the value of the acknowledgement packet count of the first downlink packet is not less than the second forwarding threshold, send all stored TCP acknowledgement packets of the first downlink packet to the network device; or if the processor determines that the value of the acknowledgement packet count of the first downlink packet is not less than the second forwarding threshold and that the value of the acknowledgement packet count of the first downlink packet is a positive integer multiple of the second forwarding threshold, send instruction information to the network device, wherein the instruction information is used to instruct the network device not to reduce a TCP send window.

33. The customer-premises equipment according to claim 25 or 26, wherein the context entry of the first downlink packet comprises a sequence number of the first downlink packet, an identifier of the first downlink packet, a frame number of a media access control MAC layer frame into which the first downlink packet is encapsulated, a retransmission count of the first downlink packet, and a flag bit indicating whether the first downlink packet is successfully sent or not, and the identifier of the first downlink packet comprises the TCP sequence number;
the processor updates the context entry of the first downlink packet in the following manner:
if the acknowledgement packet that is sent by the terminal for the first downlink packet and that is received by the receiver is a MAC positive acknowledgement ACK packet, setting the flag bit used to indicate whether the first downlink packet is successfully sent or not, to indicate that the first downlink packet has been successfully sent; or
if the acknowledgement packet that is sent by the terminal for the first downlink packet and that is received by the CPE is a MAC layer negative acknowledgement NACK packet, and a retransmission quantity of a MAC frame corresponding to the MAC layer negative acknowledgement NACK packet has reached a maximum MAC layer retransmission quantity, increasing a value of the retransmission count in the context entry of the first downlink packet by 1;
the processor determines, based on the context entry of the first downlink packet, that the stored to-be-cleared downlink packet and the stored context entry of the to-be-cleared downlink packet need to be cleared, in the following manner:
if determining that the flag bit indicating whether the first downlink packet is successfully sent or not is set to indicate that the first downlink packet has been successfully sent, determining that the to-be-cleared downlink packet and the context entry of the to-be-cleared downlink packet that are stored in the memory need to be cleared;
the processor determines, based on the context entry of the first downlink packet, that the first downlink packet needs to be retransmitted, in the following manner:
if determining that the value of the retransmission count is greater than a third retransmission threshold, determining that the first downlink packet needs to be retransmitted; and
the processor is further configured to:
after the transmitter retransmits the first downlink packet to the terminal, update the MAC frame number in the context entry with a new MAC layer frame number after MAC layer encapsulation.

34. The customer-premises equipment according to claim 25, 26, or 33, wherein the processor is further configured to:
after updating the context entry of the first downlink packet, if determining that the value of the retransmission count is greater than the third retransmission threshold, determine whether the value of the retransmission count is less than a third forwarding threshold; and when determining that the value of the retransmission count is not less than the third forwarding threshold, further determine whether a value of an acknowledgement packet count of the first downlink packet is a positive integer multiple of the third forwarding threshold;
the memory is further configured to:
if the processor determines that the value of the retransmission count is less than the third forwarding threshold, store a received TCP acknowledgement packet of the first downlink packet; and
the transmitter is further configured to: if the processor determines that the value of the retransmission count is not less than the third forwarding threshold, send all stored TCP acknowledgement packets of the first downlink packet to the network device; or if the processor determines that the value of the retransmission count is not less than the third forwarding threshold and that a value of an acknowledgement packet count of the first downlink packet is a positive integer multiple of the third forwarding threshold, send instruction information to the network device, wherein the instruction information is used to instruct the network device not to reduce a TCP send window.

35. The customer-premises equipment according to claim 25, 26, or 33, wherein the transmitter is further configured to:
after the memory stores the first downlink packet, send a TCP acknowledgement packet of the first downlink packet to the network device.

36. The customer-premises equipment according to claim 35, wherein the receiver is further configured to:
after the transmitter sends the TCP acknowledgement packet of the first downlink packet to the network device, if receiving a TCP acknowledgement packet sent by the terminal for the first downlink packet, discard the TCP acknowledgement packet sent by the terminal for the first downlink packet.
